# EUROPEAN PATENT SPECIFICATION

(11) **EP 1 966 253 B1**
(45) Date of publication and mention of the grant of the patent: **12.08.2015**
(21) Application number: 06818990.1
(22) Date of filing: 06.12.2006
(51) Int. Cl.: C08F 8/10, C08F 8/30, C08G 18/62, C08G 18/70, C09D 127/12, C09D 175/04, C14C 11/00, C08F 214/26

(54) **CURABLE FLUORINATED COPOLYMERS AND COATINGS AND PROCESSES THEREOF**
HÄRTBARE FLUORIERTE COPOLYMERE UND BESCHICHTUNGEN UND VERFAHREN DAFÜR
COPOLYMERES FLUORES DURCISSABLES ET REVETEMENTS ET PROCESSUS ASSOCIES

(30) Priority: 19.12.2005 EP 05027728; 17.02.2006 EP 06003301
(43) Date of publication of application: 10.09.2008
(73) Proprietor: LANXESS Deutschland GmbH, 50569 Köln (DE); DAIKIN INDUSTRIES, LTD., Osaka-shi, Osaka 530-8323 (JP)
(72) Inventor: REINERS, Jürgen, 51373 Leverkusen (DE); HASSEL, Tillmann, 50259 Pulheim (DE); MAIER, Rodger, 51373 Leverkusen (DE); UEDA, Akihiko, Hirakata City, Osaka 573-0066 (JP); NAGATO, Masaru, Sakai City, Osaka 590-0115 (JP); MAEDA, Masahiko, Toyonaka City, Osaka 560-0032 (JP)
(74) Representative: Herbold, Matthias
(86) International application number: PCT/EP2006/011695
(87) International publication number: WO 2007/071323

(56) References cited:
- EP-A- 0 320 156
- EP-A- 1 123 981
- EP-A- 1 233 044
- EP-A1- 0 301 557
- EP-A1- 1 593 720
- EP-A2- 0 214 599
- WO-A-2004/059014
- US-A- 5 223 562
- US-A- 5 283 304
- DATABASE WPI Week 199241 Derwent Publications Ltd., London, GB; AN 1992-335455 XP002421862 & JP 04 239072 A (ASAHI GLASS CO LTD) 26 August 1992 (1992-08-26)

## Description

This invention relates to a process for coating of various substrates by applying fluorinated copolymers thereto, some fluorinated copolymers as such and its preparation, coating composition and the coated substrates.

Coating of rigid substrates with fluorinated copolymers is already known.

US-A-5548019 describes a composition for an aqueous coating material comprising a poly-socyanate compound and a fluorine-containing copolymer having hydroxyl groups for rigid substrates like concrete.

The WO-A-2004/072197 (priority JP 035583, JP 407700) discloses fluorine-containing aqueous coating composition, comprising A) a functional group containing fluororesin aqueous emulsion obtained by dispersing in water a fluoroolefin copolymer having functional groups obtained by a solution polymerization process and B) a water-dispersible unblocked isocyanate compound for the coating of rigid substrates.

Also coatings of flexible substrates are known but using the coating agent in a non-aqueous form.

In the WO 2004/059014 (JP 2004-203921; priority JP 2002-371567) and JP-2000-054000 (EP-1123981) fluoropolymer based coating compositions for leather, a coating method and the coated leather are disclosed.

EP-A-1338637 discloses aqueous dispersions of fluorinated copolymers as coating compositions that necessarily contain a set of emulsifiers and surfactants in order to stabilize the dispersions.

Additionally fluorinated copolymers as coating agents are disclosed in US-A-4487893, EP-A-848023, JP-04-239072, JP-05-117578, JP-05-179191, JP-02-289639, JP-03-047853 (DE-A-4010881), WO 2001/019883, EP-A-841405, DE-A-4201603, JP-05-247306, JP-2004/238621, DE-4416415 (EP-682044), JP-2004/203946, EP-1238004 JP-02-300389 and US-A-4487893.

The requirements to anti-soiling properties and mechanical stability of coatings to scratch resistance, flexural strength, inter-layer adhesion and fastness properties have been steadily increasing in recent years.

Furthermore, ecological restrictions have forced many industrial branches to enhance their attempts for creating a safer and cleaner handling of coating systems that provide the highest possible benefit to the customer. Therefore, the demand for solventless or solvent-free systems is still increasing.

For practical reasons any solvent-content that may be present in a formulation can be determined according to the guidelines for VOC (Volatile Organic Compounds). VOC means any organic compound having an initial boiling point less than or equal to 250°C measured at a standard pressure of 101,3 kPa (as used in Directive 2004/42/CE of the European Parliament and of the Council on the limitation of emissions of volatile organic compounds due to the use of organic solvents in decorative paints and varnishes). The VOC content of a product in it's ready-to-use state is determined as specified in the directive being either ISO 11890-2 or ASTM D 2369. The VOC content is calculated from analytical measurements in grams/liter, whereby the density of the product is measured with the appropriate density determination method (ISO 2811).

Many patents disclosed in the literature have contributed to technical improvements and quite acceptable solutions. Already existing solutions proposed in the patent literature have the disadvantage that the coatings irrespective of the curing reaction involved to reduce some hydrophilic functionality contain a large proportion of residual hydrophilic groups that contribute to insufficient chemical resistance and soil repellency.

However, there is still a demand for aqueous coating and finishing systems that are capable to meet high performance requirements not only with respect to water-,oil and dirt-repellency, but also to impart high mechanical durability, e.g. flexural strength, tear strength, compressive strength, notched impact resistance, high flexibility on exposure to dry, wet and cold flexes or bending or shear forces, heat- and UV-resistance, abrasion-resistance and water- and humidity-resistance.

The mechanical requirements to a coating system can be fulfilled by applying a finish or top-coat consisting of polyurethane-dispersions or high-performance polyacrylate dispersions. Anti-staining properties on its own can be imparted to a substrate by application of a fluorine-containing copolymer dispersions. These coating compositions known from the prior art have still deficiencies or disadvantages that must be avoided or at least need improvements.

It is known, that fluorine-containing polymers may cause inter-layer adhesion problems or may deteriorate other properties e.g. mechanical strength, optical properties or provide a dry and unpleasant feeling on touching a surface.

As an example, to provide leather for car interior, especially car seats, it is desirable to provide leather that is resistant to staining by dyestuff-transfer or migration from garment worn by the end-user or can be protected from soil like dust, oil, printing inks or toner from newspapers / magazines, inks from pens or permanent marker, tobacco ash, common food, sauces, spices and beverages, sun-tans, cosmetic compositions and so on or at least is customer-friendly by imparting easy-to-clean properties and cleanability so that substantially no residue of soil or dirt will be detectable nor any damage of the finish.

The objective of the present invention is to provide a solution, that will overcome the drawbacks of known fluorinated polymer compositions. Furthermore it is the purpose of the invention to provide fluorinated polymer compositions for coating and finishing applications that meet the requirements described above. For example, it is an objective of the invention to provide room-temperature curable coating compositions that are applicable to flexible substrates, particularly that are heat-sensitive materials such as leather.

With regard to the present invention the term "dirt" means any contamination of the surface in question preferably by visible components altering optical aspect, hand and/or physical properties of the original surface e.g. various colors from pens, from permanent (solvent-based) or removable (water-soluble) marker, different colored crayons, cosmetics such as lipstick, sun-tans and the like, ketchup, mustard, oil, tobacco ash, dust and transfer of dyes being insufficiently fixed to garment like jeans on rubbing or pressing against the surface in question.

Surprisingly it has been found a process for coating flexible substrates applying a curable fluorinated copolymer A2 onto the substrate wherein the curable fluorinated copolymer A2 is the reaction product of FC and
M1) trimellitic anhydride, and optionally
M2) at least a monofunctional isocyanate,
wherein FC is a curable fluorinated copolymer on the basis of
FC1) at least one fluorinated olefin having 2 to 10 carbon atoms,
FC2) at least one non-fluorinated olefin having OH-groups and optionally carboxyl groups and
FC3) at least one non-fluorinated, hydroxyl group free olefin having optionally carboxyl groups.

In the present invention-M1) is trimellitic anhydride.

It is preferred to use a copolymer A2 wherein M2) represents as monofunctional isocyanate a C₁-C₂₂-alkylisocyanate, a C₅-C₈-Cycloalkylisocyanate or a reaction product of a C₄-C₂₂-alkylene-di-isocyanate or an optionally alkyl substituted C₅-C₃₆-cycloalkylene or aralkylene di-isocyanate and a polyether mono alcohol. For instance, suitable monofunctional isocyanates are cyclohexyl isocyanate, butyl isocyanate, hexyl isocyanate, decyl isocyanate, dodecyl isocyanate, hexadecyl isocyanate, octadecyl isocyanate. Furthermore, suitable monoisocyanates are the reaction products of polyether mono alcohols and (cyclo)alkylene diisocyanates or aralkylene diisocyanates obtained by reaction of a stoichiometric excess of (cyclo)alkylene or aralkylene diisocyanates with a monofunctional polyether, followed by removal of any unreacted diisocyanate. Suitable alkylene diisocyanates, cycloalkylene diisocyanates and aralkylene diisocyanates are butylene diisocyanate, hexamethylene diisocyanate, isophorone diisocyanate, 1,4-bis (2-isocyanato-1-methyl-ethyl) benzene, cyclohexylene diisocyanate, xylylene diisocyanate, trimethyl hexamethylene diisocyanate, octamethylene diisocyanate, bis(isocyanato cyclohexyl) methane. Suitable monofunctional polyethers are obtainable by alkoxylation of monofunctional alcohols such as methanol, ethanol, propanol, isopropanol, allyl alcohol, butanol, isobutanol, methoxy ethanol, ethoxyethanol, methoxy ethoxyethanol, ethoxy ethoxyethanol, butoxy ethanol, butoxy ethoxyethanol, 2-methoxy propanol, 2-ethoxy propanol, 2-butoxy propanol with ethylene oxide and/or propylene oxide. The reaction products of diisocyanates with monofunctional polyethers contain preferably less than 1% unreacted diisocyanates, preferably less than 0,5% unreacted diisocyanate, more preferred less than 0,2% unreacted diisocyanate.

A preferred FC represents a curable fluorinated copolymer on the basis of
FC1) at least one per-fluorinated or partially fluorinated linear, branched or cyclic C₂ - C₁₀-olefin being chlorine-free or substituted by chlorine and/or being optionally interrupted by heteroatoms selected from the group consisting of O, S, N, Si or functional groups consisting of these heteroatoms like sulfonyl or siloxy, in particular tetrafluoroethene, vinylidenefluoride, chlorotrifluoroethene, hexafluoropropene, octafluorobutene, C₁-C₈-perfluoroalky]-1H,1H,2H-ethene, pentafluorophenyl trifluoroethene, pentafluorophenyl ethene or mixtures thereof,
FC2) at least one OH-substituted alkyl acrylic or methacrylic acid esters, hydroxyl substituted vinyl ethers or allylethers, such as 2-hydroxyethyl acrylate, 2-hydroxyethyl methacrylate, 2-hydroxypropyl acrylate, 2-hydroxypropyl methacrylate, 3-hydroxypropyl acrylate, 3-hydroxypropyl methacrylate, 2-hydroxyethyl vinyl ether, 3-hydroxypropyl vinyl, ether, 4-hydroxybutyl vinyl ether, 2-hydroxyethyl allyl ether, 3-hydroxypropyl allyl ether, 4-hydroxybutyl allyl ether, omega-hydroxy-poly(ethyleneoxy)alkyl (meth)acrylate, omega-hydroxy-poly-(propyleneoxy)alkyl (meth)acrylate, omega-hydroxy-poly(ethyleneoxy)alkyl vinyl ether, omega-hydroxy-poly(propyleneoxy)alkyl vinyl ether, wherein the polyoxyalkylene chain contains between 2 and 30 ethylene oxide and/or propyleneoxide units, or mixtures thereof and
FC3) at least one olefinic monomer having no hydroxyl groups selected from the group consisting of acrylic acid, methacrylic acid and methyl acrylate, methyl methacrylate, ethyl acrylate, ethyl methacrylate, propyl acrylate, propyl methacrylate, butyl acrylate, butyl methacrylate, 2-ethylhexyl acrylate, 2-ethylhexyl methacrylate, decyl acrylate, decyl methacrylate, undecyl acrylate, undecyl methacrylate, dodecyl acrylate, dodecyl methacrylate, tridecyl acrylate, tridecyl methacrylate, tetradecyl acrylate, tetradecyl methacrylate, hexadecyl acrylate, hexadecyl methacrylate, octadecyl acrylate, octadecyl methacrylate, acrylic and methacrylic esters of guerbet alcohols having 8 to 36 carbon atoms and mixtures thereof,
   maleic anhydride, maleic acid, fumaric acid, itaconic acid, crotonic acid, vinylacetic acid, norbornene carboxylic acid, norbornene dicarboxylic acid, 3-aminopropyl vinyl ether, 4-aminoproyl vinyl ether, 2-t-butyl-aminoethyl methacrylate, vinyloxyethyl succinate, allyloxyethyl succinate, vinyloxyethyl trimellitate, allyloxyethyl trimellitate, 3-vinyloxypropionic acid, 3-allyloxypropionic acid, vinyl pyromellitic anhydride, allyl pyromellitic anhydride, 10-undecylenic acid omega-C₁-C₄-alkoxy-poly(ethyleneoxy)alkyl (meth)acrylate, omega-C₁-C₄-alkoxy-poly(propyleneoxy)alkyl (meth)acrylate, wherein the polyoxyalkylene chain contains between 2 and 50 ethylene oxide and/or propyleneoxide units and mixtures thereof,
   non-fluorinated vinyl-ester comonomers having no hydroxyl-group, in particular vinyl acetate, vinylpropionate, vinyl butyrate, vinyl hexanoate, vinyl octanoate, vinyl decanoate, vinyldodecanoate, vinyl tetradecanoate, vinyl hexadecanoate, vinyl octadecanoate, vinyl lactate, vinyl pivalate, vinyl benzoate, vinyl para-tert-butylbenzoate and vinyl versatate and mixtures thereof,
   non-fluorinated vinyl-ether comonomers having no hydroxyl-group, in particular methyl vinyl ether, ethyl vinyl ether, propyl vinyl ether, butyl vinyl ether, isobutyl vinyl ether, hexyl vinyl ether, cyclohexyl vinyl ether, omega-C₁-C₄-alkoxy-poly(ethyleneoxy)alkyl vinyl ether, omega-C₁-C₄-alkoxy-poly(propyleneoxy)alkyl vinyl ether, wherein the polyoxyalkylene chain preferably contains between 2 and 50 ethylene oxide and/or propyleneoxide units, and mixtures thereof,
   allylester in particular allyl formate, allyl acetate, allyl propionate, allyl butyrate, allyl hexanoate, allyl octanoate, allyl decanoate, allyl dodecanoate, allyl tetradecanoate, allyl hexadecanoate and allyl octadecanoate and mixtures thereof,
   allylether, in particular methyl allyl ether, ethyl allyl ether, propyl allyl ether, butyl allyl ether, isobutyl allyl ether and hexyl allyl ether and mixtures thereof,
   alpha-olefin in particular ethene, propene, butene, isobutene and 2-methyl-1-pentene, 1-pentene, 1-hexene, 1-octene, 1-decen, 1-dodecene and mixtures thereof,
   unsaturated diester carboxylate in particular dimethyl maleate, diethyl maleate, dibutyl maleate, diethyl fumarate, dibutyl fumarate and mixtures thereof.
   In a preferred embodiment of the present invention, a curable fluorinated copolymer FC is obtained by reaction of
   FC 1) 20-60 mol %, preferably 40-55 mol % at least one fluorinated olefin, such as tetrafluoroethene, chlortrifluoroethene and/or hexafluoropropene, preferably 40-55 mol % of tetrafluoroethene,
   FC 2) 5-45 mol %, preferably 10-25 mol % of at least one hydroxyl group containing monomer, such as 2-hydroxyethyl vinyl ether, 3-hydroxypropyl vinyl ether, 4-hydroxybutyl vinyl ether, 2-hydroxyethyl allyl ether, 3-hydroxypropyl allyl ether and/or 4-hydroxybutyl allyl ether, and
   FC 3) 1 to 45 mol% in particular 1 to 15 mol%, preferably 1 to 5 mol% of at least one carboxyl group containing monomer selected from the group consisting of maleic acid, maleic anhydride, fumaric acid, itaconic acid, crotonic acid, vinylacetic acid, norbornene carboxylic acid and norbornene dicarboxylic acid,
and
0-45 mol %, preferably 5-35 mol % of a non-fluorinated olefin, such as ethene, propene, butene, isobutene and/or 2-methyl-1-pentene,
and
0-45 mol %, preferably 0.1-15 mol % of a vinyl ether monomer, such as ethyl vinyl ether, propyl vinyl ether, butyl vinyl ether and/or cyclohexyl vinyl ether,
and
0-45 mol %, preferably 5-30 mol % of a vinyl ester monomer, such as vinyl acetate, vinyl propionate, vinyl butyrate, vinyl hexoate, vinyl octoate, vinyl decanoate, vinyl dodecanoate, vinyl tetradecanoate, vinyl hexadecanoate, vinyl octadecanoate, vinyl lactate, vinyl pivalate, vinyl benzoate, vinyl para-tert-butyl benzoate and/or vinyl versatate,
whereby the total of all monomers gives more than 95 mol%, in particular more than 98 mol%, preferably 100 mol %.

The curable fluorinated copolymer FC used as reactant in the present invention contain hydroxyl groups and optionally carboxyl groups and optionally other hydrophilic groups. In a preferred embodiment the curable fluorinated copolymer FC is soluble in organic solvents, particularly esters, ketones and aromatic solvents. Examples for suitable solvents are xylene, ethyl acetate, butyl acetate, acetone, methyl ethyl ketone .

Other hydrophilic groups that may be present in the fluorinated copolymer FC are for example, polyether residues, that are introduced by copolymerization using the corresponding comonomers mentioned under FC2) and FC3).

The concentration of hydroxyl groups and optional carboxyl groups present in the fluorinated copolymer FC can be determined by titration according to known methods and are given as hydroxyl numbers and acid numbers, respectively, in mg KOH/g.

The curable fluorinated copolymer A2 of the present invention contains hydroxyl groups and optionally carboxyl groups and optionally other hydrophilic groups.

Other hydrophilic groups that may be present in the fluorinated copolymer A2 are for example, polyether residues, that are introduced by copolymerization using the corresponding comonomers mentioned under FC2) and FC3) or by a subsequent reaction with the corresponding reactants containing such residues as described above under M2).

The concentration of hydroxyl groups and/or carboxylgroups present in the fluorinated copolymer A can be determined by titration according to known methods and are given as hydroxyl numbers and acid numbers, respectively, in mg KOH/g.

Preferred curable fluorinated copolymers A2 have a hydroxyl number in the range from 10 to 300 mg KOH /g. Lower amounts of hydroxyl groups can give polymers with too low crosslink density, thus giving coating layers that will have inferior mechanical resistance. Higher amount of hydroxyl groups can lead to polar polymers causing enhanced hydrophilicity and better adhesion of polar dirt, thus giving coating layers that will have inferior antisoiling resistance and swelling characteristics.

Preferred curable fluorinated copolymers A2 have a carboxyl number in the range from 5 to 150 mg KOH /g. Lower amounts of carboxyl groups can give polymers with a lack in dispersion stability and having a large particle size distribution, thus giving coating layers that will have inferior mechanical resistance and film-forming properties. Higher amount of carboxyl groups can give polymers with very hydrophilic properties, thus giving coating layers that can have inferior water resistance and antisoiling properties and may keep this undesirable permanent hydrophilicity if not increasing the amount of crosslinkers.

Preferred curable fluorinated copolymers A2 are further characterized by a fluorine content of 5-60 % F, preferably 10-50 % F, most preferably 20-40 % F, each calculated from the parts by weight fluorine (F) related to 100 parts of copolymer solids.

Preferred curable fluorinated copolymers A2 have a molecular weight measured as number average molecular weight Mn in the range from 5000 to 100000, preferably from 7000 to 50000, mostly preferably from 10000 to 30000 g/mol. The Mn is measured by separation of the polymer by gel chromatography and calculation the molecular weight against a kit of polymer standards having a known narrow molecular weight distribution.

Flexible substrates are for example non-woven, woven-fabrics, textiles, garment, paper, natural leather, genuine leather either coated or non-coated, split leather, patent leather, artificial leather, plastic sheet and elastomer, with genuine leather either coated or non-coated, natural leather, split leather, paper and textiles being preferred.

Particularly, preferred leather substrates are finished and unfinished leathers.

Rigid substrates may be a metal surface such as iron, stainless steel, brass, aluminum, other alloys, mineral surfaces such as concrete, ceramics, glass, silica or an organic surface from natural source like wood or man-made materials such as polymers, preferably thermoplastic materials, crosslinked materials such as composites, fibre reinforced plastics, sealants, rubberelastic materials such as sealants, elasthane-fibres, woven and non-woven fabrics, glass fibers, metal/plastic combination materials such as electric circuit, printed circuit and electric parts.

Preferably, this invention relates to compositions for finishing or coating textiles, artificial leather, paper, proteinaceous surfaces like genuine, natural leather, split leather.

It is preferred to use the copolymer A2 as an aqueous dispersion. In particular its content of volatile organic compounds according to ISO 11890-2 is lower than 1,0 %, preferably lower than 0,5%.

The copolymer A2 may be used as such or in combination with crosslinkers B and other components but organic solvents.

As crosslinker B one or more crosslinker based on
B1) a blocked or unblocked water-dispersible polyisocyanate including mixtures of hydrophilic polyisocyanates with hydrophobic polyisocyanates with the proviso that the mixture is water-dispersible and/or
B2) a polycarbodiimide and/or
B3) other crosslinkers different from B1) and B2)
   is preferred.

The crosslinkers preferably used in the present invention are blocked or unblocked water-dispersible polyisocyanates B1), polycarbodiimides B2) or mixtures thereof. Furthermore, optionally other crosslinkers that contain crosslinking functionalities being different from isocyanate and/or carbodiimide are advantageously used with respect to the invention.

### B1)

Although blocked polyisocyanates can advantageously be used according to this invention, it is however recommended to use unblocked polyisocyanates as crosslinkers.

Blocked water-dispersible polyisocyanates B1) are polyisocyanates that do not have any free isocyanate groups but functional groups derived therefrom that are capable of reacting with compounds having NCO-reactive groups, wherein the bond between the blocking group and the polyisocyanate residue will be scissioned on heating or on contact with the other components of the composition bearing such NCO-reactive groups. The leaving group of the blocking can be split off and will diffuse through the coating layer and leave the coating. On the other hand it is possible and more desirable, that the leaving group will be incorporated and fixed in the coating layer by a chemical reaction with the fluorinated polymer composition on drying.

Preferred blocking groups are isopropylamine, methyl benzylamine, tert butyl benzyl amine, amino-triazol, 2-aminocaprolactam, caprolactam, acetyl acetone, hydroxylamine, butanone oxime, sodium bisulfite. Preferred blocking groups are isopropylamine, methyl benzylamine, tert butyl benzyl amine, amino-triazol, acetyl acetone, sodium bisulfite.

Unblocked water-dispersible polyisocyanates B1) are polyisocyanates to be mechanically dispersed in an aqueous solution by applying shear forces or are self-emulsifiable polyisocyanates. Self-emulsifying means that said polyisocyanates are modified by hydrophilic groups in such a way that the polyisocyanate will dissolve in water or, vice versa, is readily dilutable on addition of water or any aqueous system. Polyisocyanates that are more hydrophobic need application of shear forces (static mixers, high speed stirring, high pressure homogenizers, rotor stator mixers, high pressure nozzle techniques). Additionally, but not preferred, they may contain external emulsifiers of nonionic, anionic or cationic type, whereas the nonionic and anionic types are preferred with respect to compatibility with the components of the composition.

The polyisocyanates to be mechanically dispersed in water are for example tetramethylene diisocyanate, hexamethylene diisocyanate, isophorone diisocyanate, cyclohexylene diisocyanate, bis(isocyanatocyclohexyl)methane, diisocyanatononane, xylylene diisocyanate, toluylene diisocyanate, pure or crude diphenylmethane diisocyanate, urethane and/or allophanate groups containing reaction products of the above-mentioned polyisocyanates with polyols such as methanol, ethanol, propanol, isobutanol, butanol, ethylene glycol, glycerol, trimethylolpropane, pentaeryhrit, sorbitol and their alkoxylation products with ethylene oxide and/or propylene oxide.

Preferred unblocked water-dispersible polyisocyanates are aliphatic or cycloaliphatic polyisocyanates having a NCO-functionality of at least 2, preferably 2 to 6, more preferably 2.3 to 4.

Preferred water-dispersible polyisocyanate crosslinkers are biurets, allophanates, uretdiones or isocyanurate groups containing trimerisates of hexamethylene diisocyanate or isophorone diisocyanate that are modified by polyethers or by polyethers and ionic groups.

Preferred water-dispersible polyisocyanate crosslinkers are also mixtures of hydrophilic polyisocyanates with hydrophobic polyisocyanates with the proviso that the mixture remains water-dispersible. Hydrophobic polyisocyanates are for instance those polyisocyanates mentioned above and being suitable as reactants for synthesis of hydrophilic polyisocyanates.

Especially preferred are nonionic polyisocyanates that are modified by polyethers. As such are mentioned mixtures of aliphatic or cycloaliphatic polyisocyanates having monoalkoxy polyether substituents said polyethers being composed of 10 or less ethylene oxide units on average. Such polyisocyanates are for example described in the EP-A 540 985.

In addition to these nonionically hydrophilized, polyetherurethane groups containing polyisocyanates, preferred crosslinkers are also polyether modified water-dispersible polyisocyanates that contain additional ionic groups, e.g. sulfonate (e.g. EP-A 703 255) or carboxylic groups or amino- or ammonium groups (e.g. EP-A 582 166) in order to impart an improved emulsification or to obtain special effects.

As useful polyisocyanates are mentioned, for example,
- reaction product obtained from 80 parts of a HDI-trimerisate and 20 parts of an ethoxy terminated EO-polyether having a number average molecular weight of 350 g/mol;
- reaction product obtained from 90 parts of a HDI-trimerisate and 10 parts of a methoxy terminated EO-polyether having a number average molecular weight of 70 to 750 g/mol;
- reaction product obtained from 85 parts of a HDI-trimerisate and 15 parts of a butoxy terminated EO/PO-segmented polyether with a ratio EO/PO = 7:3 and having a number average molecular weight of 2250 g/mol;
- reaction product obtained from 83 parts of a HDI-biuret and 17 parts of a methoxy terminated EO-polyether having a number average molecular weight of 650 g/mol;
- reaction product obtained from 87 parts of a IPDI-trimerisate and 13 parts of a 2:1 mixture of methoxy terminated EO-polyether having a number average molecular weight of 350 and 750 g/mol, respectively; .
- reaction product obtained from 80 parts of a HDI-trimerisate and 3 parts triethylene glcol and 17 parts of a ethoxy terminated EO-polyether having a number average molecular weight of 550 g/mol;
- reaction product obtained from 87 parts of a HDI-trimerisate and 0,2 parts of n,N-dimethyl ethanolamine and 16.9 parts of a methoxy terminated EO-polyether having a number average molecular weight of 350 g/mol, being afterwards reacted with dibutyl phosphate to protonize the tertiary amino group;
- reaction product obtained from 85 parts of a HDI-trimerisate and 5 parts of a the sodium salt of ethoxylated 1,4-butanediol-2-sulfonic acid (number average molecular weight of 368 g/mol) an 10 parts of an ethoxy terminate EO-polyether having a number average molecular weight of 370 g/mol.

The proportion of the polyisocyanates crosslinkers to be added to the composition is not particurlarly restricted, but preferably within a range of from 1 to 6, preferably 1 to 4, more preferably 1,2 to 3 NCO-equivalents in terms of a ratio of NCO-equivalents to the OH-equivalents (molar ratio) provided by copolymer A2.

Lower NCO/OH ratios are undesirable because the crosslinking is not sufficient to provide coating systems having the intended properties. For example, the mechnaical resistance of the surface against scratches or abrasion may suffer from a softer coating layer.

Higher NCO/OH ratios are undesirable because too much free NCO-groups remaining after the reaction of the hydroxyl groups of the composition will react with water and may produce bubbles in the coating layer. Such voids will play the role of initiation points at which any cracks will start and propagate with high velocity on application of bending or tear forces until the complete coating will crack or will be split off.

### B 2)

The preferred polycarbodiimides B2) are water-dispersible based on aliphatic polyisocyanates or cycloaliphatic polyisocyanates or aromatic polyisocyanates the aliphatic and cycloaliphatic polyisocyanates being preferred due to their better lightfastness properties.

Polycarbodiimides B2) are known to persons skilled in the art and are for example prepared by reaction of polyisocyanates with catalysts for example phosphorus compounds such as phospholene oxide until the desired degree of conversion is reached followed by inactivating the catalyst through an acidic catalyst-poisoning compound such as p-toluene sulfonic acid or phophorus trichloride. Examples of polycarbodiimides are mentioned in the following publications:
US 5252696, DE 19954599 , EP 571867 / US 5200489.

For example, hexamethylene diisocyanate or isophorone diisocyanate are reacted with phospholene oxides until the NCO-content has decreased to the desired value. Then a stopper such as p-toluene sulfonic acid or phosphorus trichloride is added. The reaction can be conducted in inert solvents or solvent-free at a reaction temperature between 50°C and 200°C, preferably between 100°C and 185°C. Typically, the carbodiimide content (-N=C=N- group) is determined by IR-spectroscopy or by titration with oxalic acid and determination of the evolved volume of carbon dioxide.

Hydrophilic polycarbodiimides B2) can be obtainable from hydrophilically modified polyisocyanates preferably having a NCO-funtionality lower than 2 and subsequent carbodiimidization reaction, optionally in presence of additional monofunctional alcohols as chain terminators, to such an extent, that crosslinking is avoided.

Preferred polycarbodiimides B2) are obtained by reaction of aromatic or (cyclo)aliphatic diisocyanates such as toluylene diisocyanate, diphenylmethane diisocyanate, xylylene diisocyanate, isophorone diisocyanate (1-isocyanato-3-isocyanatomethyl-3,5,5-trimethylcyclohexane), 1,6-hexamethylene diisocyanate, 2,2,4-trimethyl-hexamethylene diisocyanate, 1,4-tetramethylene diisocyanate, 4,4'- and/or 2,4'-dicyclohexyl-methane diisocyanate, 1,3- and 1,4-bis(isocyanatomethyl) cyclohexane with a chain terminator (mono isocyahate, monofunctional C1-C18-alcohol or a monofunctional polyether obtained by ethoxylation and / or propoxylation of a C1-4 alcohol, followed by reaction with phospholene oxide at 0-200°C until the NCO-groups are converted to the desired degree of carbodiimidization. In another also preferred embodiment the diisocyanate is reacted with the carbodiimidization catalyst until the desired degree of conversion is reached followed by adding a deactivator for the catalyst and further reaction of remaining NCO-groups with a monofunctional alcohol component of the type described above. It is also preferred to use difunctional hydroxyl compounds for chain-extension of the polycarbodiimide. Preferred difunctional hydroxyl compounds for that purpose are those that are able to increase the hydrophilicity of the polycarbodiimide or to improve the water-dispersibility of the polycarbodiimides such as dimethylol propionic acid, the addition product of sodium bisulfite and propoxylated 2-butene-1,4-diol and polyoxyethylene polyether having a molecular weight Mn from 200 to 2000 g/mole.

The proportion of the carbodiimide crosslinkers to be added to the composition is not particularly restricted, but preferably within a range of from 1 to 6, preferably 1 to 4, more preferably 1.2 to 3 NCN-equivalents in terms of a ratio of NCN-equivalents to the COOH-equivalents (molar ratio) provided by copolymer A).

### B 3)

Other suitable crosslinkers B3) are aziridines, epoxides, metal compounds (metal oxides or metal complexes), melamine formaldehyde resins. Suitable cross-linkers are also radical initiators being able to start a crosslinking reaction by thermal polymerization of double bonds or by UV-activated polymerization of double bond containing systems.

As additional components the coating composition may contain C) one or more film-forming polymers, optionally substituted by terminal and/or pendant functional groups being reactive towards the crosslinkers B)
and
D) optionally coating additives and/or auxiliaries (for instance, film-forming binders, matting agents, pigments, pigments dispersing agents, dyestuffs, flow agents, levelling agents, thickeners, touch modifiers, anti-tack auxiliaries, defoamers, anti-foaming agents, de-aerators, crosslinking catalysts, crosslinking accelerators, UV-stabilizers, UV-absorbers, HALS, antioxidants, fillers, fungus preventing agents, anti-skinning agents, flame retardants, anti-drip agents, anti-static agents, rust preventing agents, antiseptics, anti-freezing agents, gelation preventing agents, hydrophilizing agents like as organometallic compounds or inorganic compounds, alkylsilicates, silane coupling agents and other metal-based coupling agents (such as titanium-based (or titanate-based) coupling agents, aluminum-based coupling agents and zirconium-based coupling agents), solvents, surface active agents, emulsifiers) and
E) water.

As possible other components of the coating composition for example the following are mentioned.

Film-forming binders are e.g.: polyurethane binders, polyacrylate binders and mixtures thereof. These binders are commonly used in leather finishing and are known to persons skilled in the art.Matting agents are all commercially available microparticulate systems producing a dulling effect and containing silica and/or organic particles dispersed in carrier matrices and formulated in water.

Pigments are commercially available formulations preferably containing inorganic and/or organic chromophores such as titanium oxide, iron oxide, organic pigments, complexed metals Pigments dispersing agents are commercially available components for stabilizing pigment formulations for example amines, organic acids.

Flow agents are components improving the flow out characteristics and evenness of a formulation on drying after having been applied to a substrate and may be, for example, low molecular weight acrylics, polyethersiloxanes and silicones.

Levelling agents are components improving the surface perfection for any coating application and are for example silicone additives. Such components are all commercially available and known to the persons skilled in the art.

Thickeners (rheology modifiers) are components that are necessary to adjust the viscosity of a coating formulation for the intended application mode, e.g. spray-coating, reverse roll-coating and are, for example, acrylics or PU-based associative thickeners. Such components are all commercially available and known to the persons skilled in the art.

Touch modifiers are components being necessary to adjust the hand or feel of a coated surface and are composed of various kinds of chemistry, particularly silicone formulations. Such components are all commercially available and known to the persons skilled in the art.

Anti-tack auxiliaries are components being necessary to regulate the release properties during application especially for at the ironing or embossing of a leather surface and are for example waxes, silicones. Such components are all commercially available and known to the persons skilled in the art.

Defoamers, de-aerators are for example silicones, mineral oil-based and solid defoamers. Such components are all commercially available and known to the persons skilled in the art.

Crosslinking catalysts are for example metal compounds, amines etc. Such components are all commercially available and known to the persons skilled in the art.

UV-stabilizers, antioxidants are for example benzophenones, cyanoacrylates, hindered-amines. Such components are all commercially avalaible and known to the persons skilled in the art.

The coating compositions according to the present invention are applied by spraying, brush-coating, curtain-coating, roller, dipping, roll-coating and any other coating technique generally used in the industry such as electro-deposition.

The coating composition preferably used for the present invention is in particular a room temperature curable system. In many cases of industrial applications it is preferred, however, to enhance the reaction velocity by increasing the temperature and to allow a faster drying process. Furthermore, it is possible to add catalysts to accelerate the crosslinking reaction.

To make use of the optimum performance of the present coating composition it is preferred to ensure a thorough drying of the coating directly after application, peferably in a ventilated drying channel, in order to remove the water from the coating layer and to ensure a proper film-forming process. It is further recommended to handle the coated substrate with care until the crosslinking reaction is completed. The time needed for a complete reactions depends on the curing conditions, e.g. velocity of the belt in drying channel or the temperature in the drying cabinet, the presence of catalysts or the duration of any heat exposure.

UV-stabilizers, anti-oxidants are for example benzophenones, cyanoacrylates, hindered-amines.

Such components are all commercially available and known to the persons skilled in the art.

And it is preferred to add a liquid polydialkylsiloxane, preferably polydialkylsiloxane having functional group in order to improve soft feeling of flexible substrates and/or physical properties such as cleanability and rub fastness.

Preferred polydialkylsiloxane having functional group is an oligomer or co-oligomer in which not less than 2. preferably not less than 10 and not more than 10,000, preferably not more than 1,000, of dialkylsiloxanes of the same or different kinds are condensed. Examples thereof are compounds having, as the functional group Y¹, one or more, preferably not more than 1,000 of hydroxyl, amino, epoxy, carboxyl, thiol, -(C₂H₄O)ₐ-(C₃H₆O)_{b}R¹, in which R¹ is an alkyl group having 1 to 8 carbon atoms, a and b are the same or different and each is an integer of from 1 to 40, and/or hydrolyzable alkyl silicate residues, as mentioned above.

Preferred as the hydrolyzable alkyl silicate residue is a silicon-containing functional group represented by -SiR²₃₋ₘ(OR³)ₘ, in which R² is a non-hydrolyzable hydrocarbon group which has 1 to 18 carbon atoms and may have fluorine atom; R³ is a hydrocarbon group having 1 to 18 carbon atoms; m is an integer of from 1 to 3.

Examples of R² are, for instance, methyl, ethyl, propyl.

Examples of R³ are, for instance, methyl, ethyl, propyl, and methyl is preferred particularly from the viewpoint of excellent reactivity (hydrolyzability).

While m is an integer of from 1 to 3, m is preferably 3 from the viewpoint of excellent hydrolyzability.

The polydialkylsiloxane having functional group is concretely represented by the formula (1): , 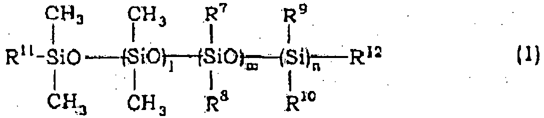 wherein R⁷, R⁸, R⁹, R¹⁰, R¹¹ and R¹² are the same or different and each is an alkyl group having 1 to 8 carbon atoms, Rf group, in which Rf is a linear or branched fluoroalkyl group which has 1 to 18 carbon atoms and may have the functional group Y¹, and may have oxygen atom and/or nitrogen atom in the midst of the chain, or -R¹³-Y¹ in which R¹³ is a divalent hydrocarbon group which has from 0 to 14 carbon atoms and may have oxygen atom and/or nitrogen atom and Y¹ is the above-mentioned functional group, and at least one of R⁷, R⁸, R⁹, R¹⁰, R¹¹ and R¹² contains Y¹; 1 is an integer of from 1 to 10,000; m is an integer of from 1 to 1,000; n is an integer of from 0 to 10,000. R⁷, R⁸, R⁹, R¹⁰, R¹¹ and R¹² are non-hydrolyzable groups. Examples thereof are preferably an alkyl group having no functional group such as CH₃, C₂H₅ or C₃H₇; an alkyl group having functional group such as Y¹-CH₂-, Y¹-CH₂CH₂- or Y¹-CH₂CH₂CH₂-; a fluorine-containing alkyl group having no functional group such as -CH₂-Rf¹ or -CH₂CH₂-Rf¹ in which Rf¹ is a fluoroalkyl group which has no functional group Y¹ and has from 1 to 18 carbon atoms; a fluorine-containing alkyl group having functional group such as -CH₂-Rf², -CH₂CH₂-Rf² or -CH₂CH₂CH₂-Rf², in which Rf² is a fluoroalkyl group which has the functional group Y¹ and has from 1 to 18 carbon atoms . Examples of Rf¹ are as follows.
(1) Fluoroalkyl group having no functional group C₂F₅CH₂-, C₄F₉C₂H₄-, C₆,F₁₃C₂H₄-, C₈F₁₇C₂H₄-, C₉F₁₉C₂H₄-, C₄F₉SO₂N(CH₃)C₂H₄-, C₄F₉C₂H₄N(CH₃)C₃H₉-, HC₄F₈CH₂-.
(2) Fluoroether group having no functional group CF₃OCF₂CF₂O-C₂H₄-, CF₃(CF₂CF₂O)₂-C₂H₄-, CF₃O(CF₂O)₂-(CF₂CF₂O)₂-, CF₃CF₂CF₂O(CF₂CF₂CF₂O)₇-, F-(C₃F₆O)₆-(C₂F₄O)₂-.

Examples of Rf² are as follows.
(3) Fluoroalkyl group having functional group OHC₂H₄CF₂CF₂CF₂CF₂C₂H₄-, HOOCCF₂CF₂CF₂CF₂C₂H₄-.
(4) Fluoroether group having functional group HOCH₂CF₂O(CF₂CF₂O)₃-C₂H₄-, HOOCCF₂O(CF₂CF₂O)₃-C₂H₄-.

From the viewpoint of excellent water- and oil-repellency, at least one of them is preferably the no-functional fluoroalkyl group or no-functional fluoroether group.

Examples of the functional group Y¹ are those mentioned supra. It is preferable that the functional group Y¹ is so bonded as in the forms mentioned below: -R¹⁴NH₂, -R¹⁴NHR¹⁵NH₂, 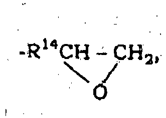 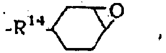 -R¹⁴COOH; -R¹⁴OH, -R¹⁴SH, 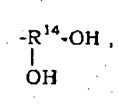 -R¹⁴-(C₂H₄O)a(C₃H₆O)bR¹, 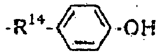 and -R¹⁴-OH
wherein R¹ is as defined above, R¹⁴ is an alkylene group having from 0 to 8 carbon atoms, R¹⁵ is an alkylene group having from 0 to 8 carbon atoms.

Non-limiting examples of commercially available polydialkylsiloxane which are classified by kind of the functional group Y¹ are as follows.

When the functional group Y¹ is OH:

Silaplaine FM-4421, FM-0421, FM-0411, FM-0425, FM-DA11, FM-DA21 available from Chisso Corporation KF-6001, KF-6002, X-22-4015, X-22-176DX available from Shin-Etsu Chemical Co., Ltd.

When the functional group Y¹ is NH₂ or -R¹⁴-NH-R¹⁵-NH₂:

Silaplaine FM-3321, FM-3311, FM-3325 available from Chisso Corporation KF-860, KF-861, KF-865, KF-8002, X-22-161B available from Shin-Etsu Chemical Co., Ltd. FZ-3501, FZ-3789, FZ-3508, FZ-3705, FZ-4678, FZ-4671, FZ-4658 available from Dow Corning Toray Co.,Ltd.

When the functional group Y¹ is epoxy:

Silaplaine FM-0521, FM-5521, FM-0511, FM-0525 available from Chisso Corporation KF-101, X-22-163B, X-22-169B available from Shin-Etsu Chemical Co., Ltd. L-9300, FZ-3736, FZ-3720, LE-9300, FZ-315 available from Dow Corning Toray Co.,Ltd.

When the functional group Y¹ is COOH:

X-22-162C, X-22-3701E available from Shin-Etsu Chemical Co., Ltd. FZ-3703 and the like available from Dow Corning Toray Co.,Ltd.

When the functional group Y¹ is SH:

KF-2001, X-22-167B available from Shin-Etsu Chemical Co., Ltd.

When the functional group Y¹ is -(C₂H₄O)ₐ(C₃H₆O)_{b}R¹:

KF-353, KF-355A, KF-6015 available from Shin-Etsu Chemical Co., Ltd.

The coating compositions according to the present invention are applied by spraying, brush-coating, curtain-coating, roller, dipping, roll-coating and any other coating technique generally used in the industry such as electro-deposition.

Suitable coating compositions are obtained by 1) dispersing the curable fluorinated polymer A2) and other components in a coating formulation adjusted to the intended use the curable fluorinated copolymer A2) being either main component for a topcoat-finish or being one component or additive in a ready-to-use topcoat formulation, 2) adjusting the viscosity and 3) activating the mixture by addition of one or more crosslinker.

It is possible to use the curable fluorinated copolymer A2) of the present invention in a base coat, as a topcoat or even as a last finish over the topcoat. Preferably, the copolymer A2) is used as component in a topcoat formulation or as last overcoat on a finished substrate.

Application modes are all techniques commonly used in practice for coating substrates. For example spraying using spray-guns or spraying machines, brushing, wiping, curtain coating, reverse-roll coating, roll-coating, electro-deposition. In the leather field, for example, spray coating techniques and roll coating and reverse-roll coating techniques are commonly the preferred.

For the leather application the amount of a formulation (adjusted to a viscosity measured as flow-time using a Ford cup, 4 mm, of 15 to 30 seconds) to be sprayed as base-coat onto the tanned leather substrate (so-called crust leather) is preferable in the range between 1 to 10 grams (wet coverage) per square foot.

For the leather application the amount of a formulation (adjusted to a viscosity measured as flow-time using a Ford cup, 4 mm, of 15 to 30 seconds) to be sprayed as topcoat onto a base-coated leather substrate is preferable in the range between 1 to 10 grams (wet coverage) per square foot. Dry coverage is preferably 0,5 to 5 grams per square foot.

It is also possible to apply the topcoat formulation as such onto the substrate if semianiline type leather is required. In this case the amount of topcoat must be kept as light as possible to get a pleasant surface.

After the application the leather substrate is preferably dried, e.g. in a drying chamber or in a drying channel wherein the leather is transported by a belt. Drying temperature is preferably kept between room-temperature and 150°C, for sensitive substrates such as leather, however, the temperature should be kept between 50 and 120°C. Drying time strongly depends on heat-transfer to the substrate to be dried and the temperature inside the dryer and its length. In a drying channel the time can be reduced to 1 to 10 minutes. The leather leaving the drying channel can immediately processed and transferred to the next step in a the leather production process.

The present invention further relates to coating composition containing at least curable fluorinated copolymer A2, wherein the curable fluorinated copolymer A is the reaction product of FC and
M1) Trimellitic anhydride and optionally
M2) at least a monofunctional isocyanate,
wherein FC is a curable fluorinated copolymer on the basis of
FC1) at least one fluorinated olefin having 2 to 10 carbon atoms,
FC2) at least one non-fluorinated olefin having OH-groups and optionally carboxyl groups and
FC3) at least one non-fluorinated, hydroxyl group free olefin having optionally carboxyl groups and at least one carbodiimide crosslinker.

This composition according to the present invention is preferably an aqueous dispersion, inpaticular 5 to 80, inpaticular 10 to 50 % by weight of solid.

It is preferred that the coating composition contains the preferred copolymers A2.

Embodiments of M1), M2), FC1 to FC3 are those given above.

A preferred composition contains
10-90 % by weight of copolymer A2
10-90 % by weight of crosslinker and
30-80 % by weight of water.

The present invention also refers to a process of preparation of the coating composition of the present invention comprising the steps:
1. homogeneously dispersing an aqueous dispersion of fluorinated copolymer A2 optionally with one or more film-forming polymers C) optionally substituted by terminal and/or pendant functional groups being reactive towards the carbodiimide crosslinkers
   and
   optionally coating additives and/or auxiliaries D) (for instance, film-forming binders, matting agents, pigments, pigments dispersing agents, dyestuffs, flow agents, levelling agents, thickeners, touch modifiers, anti-tack auxiliaries, defoamers, anti-foaming agents, de-aerators, crosslinking catalysts, crosslinking accelerators, UV-stabilizers, UV-absorbers, HALS, antioxidants, fillers, fungus preventing agents, anti-skinning agents, flame retardants, anti-drip agents, anti-static agents, rust preventing agents, antiseptics, anti-freezing agents, gelation preventing agents, hydrophilizing agents like as organometallic compounds or inorganic compounds, alkylsilicates, silane coupling agents and other metal-based coupling agents (such as titanium-based (or titanate-based) coupling agents, aluminum-based coupling agents and zirconium-based coupling agents), solvents, surface active agents, emulsifiers)
   and
   water E),
2. activating the formulation by adding at least one carbodiimide crosslinker and optionally further crosslinker B).

The mixture activated by crosslinking agents has a pot-life of preferably 4 to 24 hours at ambient temperature. It is preferred to prepare the formulation and to activate it by crosslinking agents shortly before the intended coating application.

It is also preferred to prepare storage-stable dispersions consisting of at least one fluorinated copolymer A) and one or more film-forming polymers C) whereas the ready-to-use formulation containing auxiliaries and crosslinkers is made shortly before the coating application.

The present invention refers to a,curable fluorinated copolymer A2 which is the reaction product of FC and
M1) trimellitic anhydride and optionally
M2) at least a monofunctional isocyanate,
wherein FC is a curable fluorinated copolymer on the basis of
FC1) at least one fluorinated olefin having 2 to 10 carbon atoms,
FC2) at least one non-fluorinated olefin having OH-groups and optionally carboxyl groups and
FC3) at least one non-fluorinated, hydroxyl group free olefin having optionally carboxyl groups.

The present invention refers also to a process for preparation of such a copolymer A2 comprising the steps:
1) reaction of a polymer solution comprising of solvent X and polymer FC, with
   trimellitic anhydride and optionally at least one monofunctional isocyanate, optionally in the presence of a
   solvent Y
2) neutralization of optional carboxylic groups by a base,
3) dispersion in water and
4) removal of the solvent preferably by distillation.

If a monofunctional isocyanate is involved in step 1), it is preferred firstly to react FC with the monoisocyanate and subsequently with trimellitic anhydride and optionally one or more polycarboxylic anhydride. However, it is also possible to use a mixture of monofunctional isocyanate and trimellitic anhydride and optionally one or more polycarboxylic anhydride. It is also possible to react FC with trimellitic anhydride and optionally one or more polycarboxylic anhydride in a first reaction and then with a monofunctional isocyanate.

A further subject of the invention is a coating composition containing
- at least one curable fluorinated copolymer A1 or A2 and
- at least one polyisocyanate crosslinker having at least 2 NCO units.

Preferably this composition is an aqueous dispersion.

The invention also relates to the use of a curable fluorinated copolymer A which is the reaction product of FC and.
M1) Trimellitic anhydride and optionally
M2) at least a monofunctional isocyanate,
wherein FC is a curable fluorinated copolymer on the basis of
FC1) at least one fluorinated olefin having 2 to 10 carbon atoms,
FC2) at least one non-fluorinated olefin having OH-groups and optionally carboxyl groups and
FC3) at least one non-fluorinated, hydroxyl group free olefin having optionally carboxyl groups in particular as aqueous dispersion as coating agent for flexible substrates.

The invention also refers to a process for coating rigid substrates applying a curable fluorinated copolymer A2 onto the substrate.

A further subject of the present invention is the substrate obtained by the coating process of the present invention in particular the substrate coated with the copolymer A2.

The aqueous coating compositions according to the present invention are used as coatings for various substrates. For example, they can be used as protective coatings, more particularly as anti-graffiti coatings, anti-soil coatings or easy-to-clean topcoats,on rigid or flexible substrates.

Suitable flexible and rigid substrates are mentioned above.

The curable fluorinated copolymer A2 is used particularly for coating flexible or rigid, in particular flexible substrates.

Preferably, the coating compositions of this invention are advantageously used as a sole topcoat for finishing of textiles, artificial leather, paper, proteinaceous surfaces like genuine, natural leather, split leather. Most preferably, the compositions are used as components in topcoat formulations for coating of flexible substrates, preferably leather, textiles and paper.

The coating compositions are applied by spraying, brush-coating, curtain-coating, roller, dipping, roll-coating, flow-coating, spin-coating and any other coating technique generally used in the industry such as electro-deposition with the amounts already mentioned above.

The coating composition of the present invention is a room temperature curable system. In many cases of-industrial applications it is preferred, however, to enhance the reaction velocity by increasing the temperature and to allow a faster drying process. Furthermore, it is possible to add catalysts to accelerate the crosslinking reaction.

To make use of the optimum performance of the present coating composition it is necessary to ensure a thorough drying of the coating directly after application, preferably in a ventilated drying channel, in order to remove the water from the coating layer and to ensure a proper film-forming process. It is further recommended to handle the coated substrate with care until the crosslinking reaction is completed. The time needed for a complete reaction depends on the curing conditions, e.g. velocity of the belt or the temperature in the drying channel or drying cabinet, the presence of catalysts or the duration of any heat exposure.

The coating composition containing the crosslinkers provides heavy-duty coatings, which are weather-resistant, have excellent anti-soiling properties and mechanical durability. In particular, soiling with solvent-based marker (e.g. xylene-based or non-xylene type) or pen or other inks of various colors that are used in the market, can be easily removed from the surface of the coated substrate by wiping the surface with a mild detergent in water or a cleaner without applying abrasive materials or solvents. The coatings are also resistant against other kinds of dirt as mentioned above. Automotive upholstery leather or leather used for other car interior, for example, is made resistant against soiling by any cosmetics. Furthermore, the coating of the present invention provides a protection for leather against intense colors from incidental spills of food and beverages. After cleaning, the surface will not be damaged or alter its optical appearance in view of gloss or color shade or any other property compared to the appearance of the substrate before contamination with the dirt.

### EXAMPLES

### Materials and methods

All components used in synthesis and application examples are dscribed below. All raw materials necessary for synthetic examples were used as obtained from suppliers:

### Thickener:

commercially available non-ionic polyurethane, e.g. 20% solids content, ACRYSOL® RM 1020

### crosslinker 1:

water-dispersible reaction product of a trimerisate of hexamethylene diisocyanate and polyethylene glycol monomethylether, e.g. AQUADERM® XL 50, 50% solution in propylene glycol diacetate

### crosslinker 2:

water-dispersible reaction product of a trimerisate of hexamethylene diisocyanate and polyethylene glycol monomethylether, e.g. AQUADERM® XL 80, 80% solution in propylene glycol diacetate

### crosslinker 3:

water-dispersible aliphatic polycarbodiimide, approx. 50% solids content, e.g. BAYDERM® Fix UCL

### flow control agent

polyether-group containing, water-dispersible polydimethyl-siloxane, 100% solids

### Description of analytical methods

Solids content, OH number, acid number, mean particle size , molecular weight, viscosity were measured according to known methods

Storage stability of the dispersions of fluorinated copolymer A was measured at 65°C, if not otherwise noted.

### Description of test methods

### Cleanability

A black oil ink pen (ball-point pen manufactured by Mitsubishi pencil Co.,Ltd.) and a black permanent solvent-based textmatker (ARTLINE® manufactured by Shachihata Inc.) were applied to the surface and left for 3 minutes at ambient temperature to let any solvent evaporate. For removal of any traces originating from applied by ball-point pen a mild detergent solution was applied to a cloth which was then used to wipe off as much as possible of the pen-line. Textmarker spot were treated similarly, but in this case a cloth to which a little pea-like amount of a leather cleaner cream had been applied was rubbed over the marker trace to remove as much as possible. A second piece of cloth prepared with fresh cleaner was rubbed by circular movement and mild compression over the trace. The cleaning effect was evaluated visually against the untreated original by numbers from 5 (no visible traces, completely removed without change of surface appearance or damage of the finish) to 1 (traces remained).

### Other tests

Martindale test: This test is very common for testing abrasion and pilling in the textile field, but it is also recommended by producers of automotive leather as well as car manufacturers for evaluation of antisoiling properties of leather, especially for car seats, although many specific embodiments of test conditions and subsequent evaluation exist.

Leather samples treated with a fluorinated composition of the present invention were cut off with a diameter of 150 mm and were placed into the fixed sample holder of a Martindale testing machine according to manufacturer's instructions.

A piece of blue jeans cloth was exactly positioned in the opposite holder representing the moving part of the machine. Before mounting the jeans cloth it was wetted with a synthetic alkaline perspiration solution. Then the machine was closed and started. During the following cycles of treatment the jeans cloth was rubbed against the leather surface under a constant load by circular movements wherein the symmetry of the movements is described by a Lissajous-pattern and the load is determined by the machine's construction and the steel weight put on top of each movable holder. Up to 6 samples can be tested simultaneously. After application of 1000 cycles the leather specimen was removed and evaluated for any alteration of the surface.

On a specimen with very good performance no blue traces can be seen at all or the deeply blue coloured perspiration liquid will spread over the specimen (beads up, no wetting) or it can be wiped off with a mild detergent solution without any visual changes of the surface compared to the untreated original surface. Such a specimen will be evaluated by 5 (= excellent).

On the contrary, a specimen showing bad performance an intense blue-coloured square will be visible on its surface. Such a specimen will be evaluated by 0 (very bad).

All leather specimen were evaluated this way and given a number in the range between 0 and 5

Evaluation of mechanical performance of leather specimenDry flexes were measured by means of a Bally flexometer according to a standard operation procedure commonly used in the leather industry. Dry leather pieces were evaluated visually for any damage after applying 100000 sharp edged flexes. Visual changes of the specimen are also evaluated (O = no change, O-X = minor change, X = easily detectable change, X-XX = remarkable change, XX = extraordinarily strong change.

Wet flexes were measured by means of a Bally flexometer according to a standard operation procedure commonly used in the leather industry. Wet leather pieces were evaluated visually for any damage after applying 20000 sharp edged flexes. Visual changes of the specimen are also evaluated (O = no change, O-X = minor change, X = easily detectable change, X-XX = remarkable change, XX = extraordinarily strong change.

Wet rub fastness was estimated by using a VESLIC wet rub tester. Leather pieces were evaluated visually for any damage after applying repeated rubs of a wet white felt over the same specimen area. The result is given as number of cycles (approx. 1000) that can be applied without damage of the leather surface. Additionally, the corresponding color of the felt is measured against a gray scale by numbers from 1 (bad) to 5 (very good); visual changes of the specimen (range from slight rub traces visible by gloss or dull effects to rupture of the topcoat layer) are also evaluated (O = no change, O-X = minor change, X = easily detectable change, X-XX = remarkable change, XX = extraordinarily strong change.

### Synthetic examples

### Preparation of fluoropolymers FC

### Fluoropolymer 1

Into a 3,000 ml stainless steel autoclave were poured 250 g of butyl acetate, 35 g of vinyl pivalate (VPi), 32g of 4-hydroxybutyl vinyl ether (HBVE), 20 g of vinyl benzoate (VBz), 3.5g of crotonic acid (CA) and 4.0 g of isopropoxycarbonyl peroxide, followed by water-cooling to 0°C and then de-airing under reduced pressure. Thereto were added 40 g of isobutylene (IB) and 140.0 g of tetrafluoroethene (TFE), and the mixture was heated to 40°C with stirring, for reaction for 25 hours. When the inside pressure of the reactor decreased from 0.44 MPaG (4.5 kg/cm²G) to 0.24 MPaG (2.4 kg/cm²G), the reaction was terminated. After the reaction, this solution was adjusted to 50% by mass. The obtained curable fluorine-containing copolymer was analyzed by ¹⁹F-NMR, ¹H-NMR and elemental analysis, and was found to be a copolymer comprising 45 % by mole of TFE, 28.5 % by mole of IB, 10 % by mole of VPi, 5 % by mole of VBz , 1.5% by mol of CA and 10 % by mole of HBVE. A number average molecular weight (Mn) thereof measured by GPC was 2 x.10⁴.
Hydroxyl number: 60 mg KOH / g (based on solids)
Acid number: 9 mg KOH / g (based on solids)
Fluorine content: 36 wt.-% (based on solids)

### Fluoropolymer 2

Into a 3,000 ml stainless steel autoclave were poured 75 g of butyl acetate and 175 g of xylene, 18 g of vinyl pivalate (VPi), 50 g of 4-hydroxybutyl vinyl ether (HBVE), 20 g of vinyl benzoate (VBz) and 4.0 g of isopropoxycarbonyl peroxide, followed by water-cooling to 0°C and then deairing under reduced pressure. Thereto were added 40 g of isobutylene (IB) and 142.0 g of tetrafluoroethene (TFE), and the mixture was heated to 40°C with stirring for reaction for 25 hours. When the inside pressure of the reactor decreased from 0.44 MPaG (4.5 kg/cm²G) to 0.24 MPaG (2.4 kg/cm²G), the reaction was terminated. After the reaction, this solution was concentrate from 50% to 60% by mass at 40C and at vacuum. The composition of solvent ratio is butyl acetate:xylene=30:70 determined by gas chromatography. The obtained curable fluorine-containing copolymer was analyzed by ¹⁹F-NMR, ¹H-NMR and elemental analysis, and was found to be a copolymer comprising 45 % by mole of TFE, 26 % by mole of IB, 9 % by mole of VPi, 5 % by mole of VBz and 15 % by mole of HBVE. A number average molecular weight (Mn) thereof measured by GPC was 2 x 10⁴.
Hydroxyl number: 95 mg KOH / g (based on solids)
Fluorine content: 35 wt.-% (based on solids)
**Preparation of fluorinated copolymers A**

### EXAMPLE 1

To 935 g of fluoropolymer 1 (50% solution in butyl acetate) (0.5 mole OH) was added 57.64 g of trimellitic anhydride (0.3 mole) dissolved in 233 g of acetone and 3.85 g triethyl amine. After addition of 155 g of acetone the mixture was heated to 58°C and kept under reflux for 9 hours. Complete conversion of the anhydride groups was monitored by IR spectroscopy. The reaction mixture was cooled to 40°C, diluted with 775 g ethanol and was kept for 15 minutes at 40°C after addition of 80.56 g of methyl diethanol amine (0.676 mole). Then, 2700 g of water was added with vigorous stirring at 40°C in the course of 1 hour. After dispersion of the polymer solution the solvent-mixture was removed in vacuo (135-400 mbar) at 40-55°C by azeotropic distillation. A translucent dispersion was obtained.
Concentration: 20.6 wt.-%
Fluorine content: 27.6 wt.-% (based on solids)
OH-equivalent weight: 3045 g (based on solids)
Storage stability of the dispersion (at 65°C): 4 weeks.

### EXAMPLE 2 (not according to the invention)

To 982.5 g of fluoropolymer 2 (60% solution in butyl acetate and xylene) (1.0 mole OH) was added 31 g of succinic anhydride (0.31 mole) and 2.5 g triethyl amine. The mixture was heated to 70°C and kept at this temperature for 9 hours. Complete conversion of the anhydride groups was monitored by IR spectroscopy. The mixture was cooled to 45°C, followed by addition of 750 g of ethanol and 34.5 g of triethyl amine (0.345 mole). The reaction mixture was stirred for 15 minutes. Then, 2000 g water was added at 50°C in the course of 45 minutes. After dispersion of the polymer solution in water the solvents were removed in vacuo (200-500 mbar) at 45-55°C by azeotropic distillation. A translucent dispersion was obtained.
Concentration: 38.5 wt-%
Fluorine content: 32.6 wt.-% on solids
OH-equivalent weight: 945.1 g solids
Storage stability of the dispersion (20%, at 65°C): 3 weeks.

### EXAMPLE 3 (not according to the invention)

To 196.5 g of fluoropolymer 2 (60% solution in butyl acetate and xylene) (0.2 mole OH) was added 7 g of succinic anhydride (0.07 mole) dissolved in 80 g acetone and 0.5 g triethyl amine. The mixture was heated to 58°C and kept at this temperature for 9 hours. Complete conversion of the anhydride groups was monitored by IR spectroscopy. The mixture was cooled to 45°C, followed by addition of 150 g of ethanol and 7.8 g of triethyl amine (0.077 mole). The reaction mixture was stirred for 15 minutes. Then, 600 g water was added at 50°C within 2 hours. After dispersion of the polymer solution in water the solvents were removed in vacuo (200-500 mbar) at 50-70°C by azeotropic distillation. A translucent dispersion was obtained.
Concentration: 29.45 wt-%
Fluorine content: 30.9 wt.-% on solids
OH-equivalent weight: 1024.6 g solids
Storage stability of the dispersion (20%, at 65°C): 3 weeks.

### EXAMPLE 4 (not according to the invention)

To 1473.8 g of fluoropolymer 2 (60% solution in butyl acetate and xylene) (1.5 mole OH) was added 30 g of succinic anhydride (0.3 mole) and 3.75 g of triethyl amine. The mixture was heated to 70°C and kept at this temperature for 9 hours. Complete conversion of the anhydride groups was monitored by IR spectroscopy. The reaction mixture was diluted with 1075 g of ethanol and cooled to 45°C. After addition of 35 g of triethyl amine (0.35 mole) the reaction mixture was stirred for additional 20 minutes. Then, 0.9 g Tinuvin 765 dissolved in 50 g ethanol was added followed by additon of 2400 g of water added at 45°C in the course of 3 hours. After dispersion of the polymer in water the solvents were removed in vacuo (150-200 mbar) at 45-55°C by azeotropic distillation. A white dispersion was obtained.
Concentration: 41.3 wt-%
Fluorine content: 31.6 wt.-% on solids
OH-equivalent weight: 790 g solids
Storage stability of the dispersion (20%, at 65°C): 4 weeks.

### EXAMPLE 5 (not according to the invention)

To 196.5 g of fluoropolymer 2 (60% solution in butyl acetate and xylene) (0.2 mole OH) was added 6.2 g of succinic anhydride (0.062 mole) and 0.5 g triethyl amine. The mixture was heated to 70°C and kept at this temperature for 9 hours. Complete conversion of the anhydride groups was monitored by IR spectroscopy. The mixture was cooled to 45°C, followed by addition of 145 g ethanol and 2.6g lithium hydroxide hydrate in 25 g water (0.062 mole). The reaction mixture was stirred for 26 minutes. Then, 0.12 g Tinuvin 765 in 10 g ethanol was added followed by additon of 307.5 g water at 45°C in the course of 3 hours. After dispersion of the polymer solution in water the solvents were removed in vacuo (140-300 mbar) at 45-55°C by azeotropic distillation. After dilution with water a white dispersion was obtained.
Concentration: 20.0 wt-%
Fluorine content: 31.6 wet.-% on solids
OH-equivalent weight: 945.1 g solids
Storage stability of the dispersion (at 65°C): 4 weeks.

### EXAMPLE 6 (not according to the invention)

To 196.5 g of fluoropolymer 2 (60% solution in butyl acetate and xylene) (0.2 mole OH) was added 5.9 g octadecyl isocyanate (0.02 mol). The mixture was kept at 70°C for 4 hours. Complete conversion of the isocyanate was monitored by IR spectroscopy. Then, 6.2 g succinic anhydride (0.062 mole) and 0.5 g triethyl amine were added. The mixture was kept at this temperature for additional 9 hours. Complete conversion of the anhydride groups was monitored by IR spectroscopy. The mixture was cooled to 45°C, followed by addition of 145 g ethanol and 6.9 g triethyl amine (0.069 mole). The reaction mixture was stirred for 26 minutes. Then, 0.12 g Tinuvin 765 in 10 g ethanol was added followed by additon of 307.5 g water at 45°C in the course of 1 hour. After dispersion of the polymer solution in water the solvents were removed in vacuo (160-500 mbar) at 45-55°C by azeotropic distillation. The 37.9 % dispersion obtained thereafter was diluted with water, thus giving a white dispersion.
Concentration: 20.0 wt-%
Fluorine content: 30.0 wt.-% on solids
OH-equivalent weight: 1165 g solids
Storage stability of the dispersion (at 65°C): 3 weeks.

### EXAMPLE 7 (not according to the invention)

147.4 g of fluoropolymer 2 (60% solution in butyl acetate and xylene) (0.15 mole OH) was diluted with 100 g acetone and heated to 50°C. 8.58 g of an 1:1 addition product (6.85 wt.-% NCO) of isophorone diisocyanate and polyethylene glycol monomethylether (Mn = 350) (0.015 mol NCO) was added. After 2 hours no NCO could be detected by titration. At 55-60°C 3 g of succinic anhydride (0.03 mole) dissolved in 20 g acetone and 0.3 g triethyl amine dissolved in 5 g acetone were added. The reaction mixture was kept at 55-60°C. After complete conversion of the anhydride groups as monitored by IR spectroscopy 100 g ethanol was added followed by 3.5 g of triethyl amine (0.035 mole). The reaction mixture was stirred for 15 minutes. Then, 400 g water was added at 50°C under vigorous stirring within 3 hours. After dispersion of the polymer in water the solvents were removed in vacuo (100-300 mbar) at 45-55°C by azeotropic distillation. A turbid, slightly translucent dispersion was obtained.
Concentration: 19.8 wt-%
Fluorine content: 29.8 wt.-% on solids
OH equivalent weight: 988.8 g on solids
Storage stability of the dispersion (at 65°C): 2 weeks
Mean particle seize: 162 nm

### EXAMPLE 8 (not according to the invention)

147.4 g of fluoropolymer 2 (60% solution in butyl acetate and xylene) (0.15 mole OH) and 3 g of succinic anhydride (0.03 mole) and 0.3 g triethyl amine were heated to 100°C for 3 hours. After complete conversion of the anhydride groups as monitored by IR spectroscopy the reaction mixture was cooled to 70°C. 8.58 g of an 1:1 addition product (6.85 wet.-% NCO) of isophorone diisocyanate and polyethylene glycol monomethylether (Mn = 350) (0.015 mol NCO) was added. After 2 hours no NCO could be detected by titration. 100 g ethanol was added followed by 3.5 g of triethyl amine (0.035 mole) . The reaction mixture was stirred,for 15 minutes. Then, 400 g water was added at 50°C under vigorous stirring within 3 hours. After dispersion of the polymer in water the solvents were removed in vacuo (100-300 mbar) at 45-55°C by azeotropic distillation. A turbid, translucent dispersion was obtained.
Concentration: 20.7 wt-%
Fluorine content: 29.8 wt.-% on solids
OH equivalent weight: -988.8 g on solids
Storage stability of the dispersion (at 65°C): 2 weeks
Mean particle size: 86 nm

### EXAMPLE 9

To 486.2 g of fluoropolymer 1 (50% solution in butyl acetate) (0.26 mole OH) was added 25.0 g of trimellitic anhydride (0.13 mole) dissolved in 120 g of acetone and 2.0 g of triethyl amine. After addition of 80 g of acetone the mixture was heated to 58°C and kept under reflux for 9 hours. Complete conversion of the anhydride groups was monitored by IR spectroscopy. The reaction mixture was cooled to 50°C, diluted with 400 g ethanol. After addition of 35.8 g of N-methyl diethanol amine (0.30 mole) the mixture was stirred for 15 minutes at 50°C and 1400 g of water were added with vigorous stirring at 50°C in the course of 2 hours. After dispersion of the polymer the solvents were removed in vacuo (150-400 mbar) at 45-55°C by azeotropic distillation. A slightly turbid, colorless dispersion was obtained.
Concentration: 21,73 wt.-%
Fluorine content: 29.7 wt.-% (on solids)
OH number: 23,8 mg KOH/g (on solids)
Acid number: 54,8 mg KOH/g (on solids)
OH-equivalent weight: 2353 g (on solids)
Storage stability of the dispersion (at 65°C): 4 weeks.

### EXAMPLE 10

To 374.0 g of fluoropolymer 1 (50% solution in butyl acetate) (0.20 mole OH) was added 9.6 g of trimellitic anhydride (0.05 mole) dissolved in 90 g of acetone and 1.5 g triethyl amine.

After addition of 60 g of acetone the mixture was heated to 65°C and kept under reflux for 5 hours. Complete conversion of the anhydride groups was monitored by IR spectroscopy. The reaction mixture was cooled to 50°C, diluted with 300 g ethanol and was kept for 15 minutes at 50°C after addition of 11.6 g of triethyl amine (0.115 mole) and 0,3 g Tinuvin 765. Then, 1075 g of water was added with vigorous stirring at 50°C in the course of 1 hour. After dispersion of the polymer the solvents were removed in vacuo (180-400 mbar) at 45-55°C by azeotropic distillation. A white dispersion was obtained.
Concentration: 21,84 wt.-%
Fluorine content: 32,1 wt.-% (on solids)
OH-equivalent weight: 1398 g (on solids)
Storage stability of the dispersion (at 65°C): 2 weeks.

### EXAMPLE 11 (not according to the invention)

To 233.38 g of fluoropolymer 1 (50% solution in butyl acetate) (0.125 mole OH) was added 5.63 g of succinic anhydride (0.056 mole) dissolved in 60 g of acetone and 1.0 g triethyl amine. After addition of 37.5 g of acetone the mixture was heated to 70°C and kept under reflux for 9 hours. Complete conversion of the anhydride groups was monitored by IR spectroscopy. The reaction mixture was cooled to 50°C, diluted with 193,75 g ethanol and was kept for 15 minutes at 50°C after addition of 6.50 g of triethyl amine (0.0645 mole) and 0,3 g Tinuvin 765 dissolved in 12,5 g ethanol. Then, 675 g of water was added with vigorous stirring at 50°C in the course of 1 hour. After dispersion of the polymer the solvents were removed in vacuo (135-400 mbar) at 45-55°C by azeotropic distillation. A white dispersion was obtained.
Concentration: 22,86 wt.-%
Fluorine content: 32,3 wt.-% (on solids)
OH-equivalent weight: 1886 (on solids)
Storage stability of the dispersion (at 65°C): 2 weeks.

### EXAMPLE 12 (not according to the invention)

To 196.5 g of fluoropolymer 2 (60% solution in butyl acetate and xylene) (0.2 mole OH) was addled 2.5 g cyclohexyl isocyanate (0.02 mol). The mixture was kept at 70°C for 4 hours. Complete conversion of the isocyanate was monitored by IR spectroscopy. Then, 6.2 g succinic anhydride (0.062 mole) and 0.5 g triethyl amine were added. The mixture was kept at this temperature for additional 9 hours. Complete conversion of the anhydride groups was monitored by IR spectroscopy. The mixture was cooled to 45°C, followed by addition of 145 g ethanol and 6.9 g triethyl amine (0.069 mole) and 0.12 g Tinuvin 765 dissolved in 10 g ethanol. Then, 307.5 g water were added at 45°C in the course of 1 hour. After dispersion of the polymer solution in water the solvents were removed in vacuo (160-500 mbar) at 45-55°C by azeotropic distillation. A white dispersion was obtained.
Concentration: 37.74 wt-%
Fluorine content: 30.7 wt.-% (on solids)
OH number: 49:4 mg KOH/g (on solids)
OH-equivalent weight: 1137 g (on solids)
Storage stability of the dispersion (at 65°C): 2 weeks.

### Application examples

### Use of products according to the invention as sole topcoats

### Preparation of the leather specimens:

For all trials leather specimens were used, prepared as follows:

On standard automotive crust leather there was applied a binder / colour mix via roll coater in such a way, that material is applied in an amount of about 13 g (wet) per square foot). The mixture used in all cases had composition as follows:
160 parts of an aqueous white pigment formulation, containing about 56% Titanium dioxide and 4% acrylic binder
20 parts of an aqueous caramel pigment formulation, containing about 46 Ferrous oxide and 5% acrylic binder 4 parts of an aqueous brown pigment formulation, containing about 44% Ferrous oxide and 5% acrylic binder
2 parts of an aqueous carbon black formulation, containing about 12% carbon black and 5% acrylic binder
160 parts of an aqueous softening and feel improving formulation, having 25% solids content and consisting predominantly of casein, claw oil, lanolin and silica in a ratio of 1:2:0,5:1 70 parts of an aqueous silica dulling formulation, having solids content of about 23% and characterized in that the formulation contains no binder but only a very low amount of acrylic thickener, to prevent the silica from precipitation.
150 parts of an aqueous aliphatic polyester polyurethane, having solids content of about 35% and NMP content of about 5%, with modulus at 100% elongation of 2,5Mpa; tensile strength of 20 MPa and elongation at break of 600%; characterized in very good adhesion and embossing performance.
100 parts of an aqueous aliphatic polycarbonate polyurethane, having solids content of about 40% and characterized in having modulus at 100% elongation of 4 MPa; tensile strength of 20 MPa and elongation at break of 600%
200 parts of an acrylic binder having solids content of 35%, containing a very small amount (<1%) zinc oxide and having modulus at 100% elongation of 1,6 MPa; tensile strength 5,83 MPa and elongation at break of 730%.
70 parts of water.

Additionally there were used 10 parts of a feel improver (silicone emulsion having 60% solids content) and 5 parts of an associative PUR thickener having 20% PUR content..

After application of this mix, the leathers prepared werde dried at 70-80°C for about 10 minutes and stored for one day at ambient temperature. Subsequently the leathers were ironed at 90°C using an ironing pressure of 50 bar and a roller speed of 6 m/sec.

Finally, the leathers were dry drummed for 4 hours. After this, the leathers are ready for application of the antisoil topcoat.

The antisoil topcoat was applied and dried as described below, composition of the different formulations as well as test results are given in table 1.

The viscosity of these formulations is about 20-30 seconds measured by using a Ford-cup equipped with an outlet of 4 mm diameter.

This formulation was applied to the surface by means of an airless spray-gun. After spraying 2 crosses with an intermediate drying step the finished leather was left for a few minutes in a hood to remove some water and to initiate the film-forming process and was then placed in a preconditioned drying chamber where it was kept for 2 minutes at 80°C. Then the sample was removed from the drying chamber and horsed up for cooling to ambient temperature.

After conditioning at standard temperature at 293°K / air humidity of 60% for 2 days the sample was evaluated for anti-soiling performance and fastness properties.

Test method (soiling the leather surface with a permanent marker and subsequent cleaning with a commercially available leather cleaning cream) is described above; test results are judeged as follows:

Cleaning result: ranging from 1(worst; no removal of the soiling) to 5 (best; complete removal of the soiling without any negative effect on the surface to be cleaned, e.g. alterations in gloss

Result of flexings: ranging from 0 (best result, no damage) to xx (worst result, conplete damage of the finish

Result of rubfastness : ranging from 0 (best result, no observable damage of the finish) to (severe damage of the finish)

**Table 1**

| **Component** | **Appl. Ex 1** | **Appl. Ex2** | **Appl. Ex 3** | **Appl. Ex 4** | **Appl. Ex 5** | **Appl. Ex 6** |
|---|---|---|---|---|---|---|
| Synth. Ex. 1 | 440 | | | | | |
| Synth. Ex. 2 | | 235 | | | | |
| Synth. Ex. 3 | | | 308 | | | |
| Synth. Ex. 4 | | | | 218 | | |
| Synth. Ex. 5 | | | | | 449 | |
| Synth. Ex. 6 | | | | | | 449 |
| Water | 280 | 485 | 412 | 462 | 231 | 231 |
| Thickened*** | 160 | 160 | 160 | 200 | 200 | 200 |
| Flow control agent | 20 | 20 | 20 | 20 | 20 | 20 |
| Crosslinker 1 | 100 | 100 | 50 | 50 | 50 | 50 |
| Crosslinker 3 | | | 50 | 50 | 50 | 50 |
| | | | | | | |
| Cleaning Result | 4-5 | 5 | 5 | 4-5 | 4 | 4-5 |
| Dry flex * | 0 | 0 | 0-X | 0-X | X | 0 |
| Wet flex** | 0 | 0 | 0-X | X | X | 0 |

| | | | | | | |
|---|---|---|---|---|---|---|
| *100 000 flexes; ** 20 000 flexes; *** associative thickener as described; diluted in the equal amount of water | | | | | | |

Rubfastness: all specimens perform extraordinary well; they do not exhibit any damage after 1000 rubs.

### Comparison examples:

A formulation of 855 parts of a commercially available - and commonly used for hydrophobic treatment of leather finishes - non OH-functional fluorocarbon acrylate dispersion having pendant fiuroalkyl groups and a solids content of 10,5%; 20 parts flowing agent as described, and 25 parts associative thickener (in this case pure product) was prepared.

This formulation equals the formulations given in table 1 with respect to solids content of fluorocarbon resin and is thus well comparable.

The formulation was divided in two parts; to one part is added crosslinker 1 in an amount resulting in a ratio formulation-/crosslinker of 9:1.

The second part of the formulation is mixed with equal amounts of crosslinkers 1 and 3; resulting in a ratio formulation /crosslinker1 / crosslinker 3 of 9: 0,5 : 0,5.

Both resin / crosslinker formulations are applied on the test leather in a way identical to the described application method. The leathers are then dried as described.

Then the two resulting test specimens are soiled with the permanent marker and cleaning with the cleaning cream was tried as described.

Result: the leathers cannot be cleaned without damage of the antisoil topcoat. On treatment with the cleaning cream, the topcoat was removed also nearly completely, which results in severe change of aspect and gloss, thus clearly indicating, that this product doesn't work. Judgement of the cleaning result in both cases is only 1-2!! due to the observed surface damage.

According to the bad cleaning result, no additional tests were made.

### Use of products according to the invention as topcoat components, to improve antisoil properties; especially martindale performance

### Preparation of the leather specimens:

For all trials leather specimens were used, prepared as follows:

On standard automotive crust leather there was applied a binder / colour mix via airless spraying in such a way that material is applied in an amount of about 13 g (wet) per square foot. This base coat mix used in all cases had composition as follows:
85 parts of an aqueous white pigment formulation, containing about 56% Titanium dioxide and 4% acrylic binder.
12 parts of an aqueous caramel pigment formulation, containing about 46 Ferrous oxide and 5% acrylic binder
2 parts of an aqueous brown pigment formulation, containing about 44% Ferrous oxide and 5% acrylic binder
1 part of an aqueous carbon black formulation, containing about 12% carbon black and 5% acrylic binder
250 parts of an aqueous softening and feel improving formulation, having 25% solids content and consisting predominantly of casein, claw oil, lanolin and silica in a ratio of 1:2:0,5:1
200 parts of an aqueous aliphatic polyester polyurethane, having solids content of about 35% and NMP content of about 5%, with modulus at 100% elongation of 2,5Mpa; tensile strength of 20 MPa and elongation at break of 600%; characterized in very good adhesion and embossing performance.
100 parts of an aqueous aliphatic polyether polyurethane having solids content of about 40% and characterized in having modulus at 100% elongation of 16 MPa; tensile strength of 25,5 MPa and elongation at break of 350%
200 parts of an acrylic binder having solids content of 38%, characterized in being relatively hard (Shore A hardness 60)and - despite this hardness - having very low TG of - 40°C; thus being nontacky and exhibiting very good cold flex properties.
150 parts of water.

For airless spraying the mix is adjusted to a viscosity of 26 sec (4 mm cup); using the associative thickener described already.

After application of this mix, the leathers prepared were dried at 70-80°C for about 10 minutes and stored for one day at ambient temperature. Subsequently the leathers were embossed (grain pattern milled pebble, rotopress at 100°C, 180 bar, 5m/sec).

After this, the leathers are ready for application of the different antisoil topcoats.

Topcoats used, are as follows:
a) Reference topcoat, acrylic, consisting of:
   200 parts of already described low TG acrylic binder
   350 parts of an acrylic dulling agent, having solid binder content of app. 19% and silica content of app. 6%.
   20 parts of flow additive already described
   60 parts of feel improver (silicon emulsion, already described)
   20 parts of pigment mix, consisting of the same pigments and having same pigment ratio as used in the base coat
   200 parts of water
b) Reference topcoat, PUR, consisting of:
   90 parts of the high modulus polyether polyurethane as used in the base coat
   90 parts of a mixed polyether polycarbonate polyurethane, having solids content of 40%; modulus at 100% elongation of 2,5 MPa; tensile strength of 20 MPa and elongation at break of 500%.
   380 parts of a PUR / silica mix, having silica content of app. 6% and PUR solids content of app. 15%, the PUR being the same high modulus polyether type as mentioned above 20 parts of flow control agent, already described
   60 parts of feel improver, already described
   40 parts of amino functional polydimethyl siloxane emulsion having 250% solids content 20 parts pigment mix as used in the acrylic topcoat
   180 parts of water
c) Trial topcoats acrylic:
   these topcoats differ from reference acrylic topcoat formulation only in that 100 parts of the extreme low TG acrylic component are replaced with 100 parts of anti soil component described in synthetic example 1 (trial topcoat cl) or with 100 parts of anti soil component described in synthetic example 9 (trial topcoat c2) respectively. All other components are not changed.
d) Trial topcoats PUR:
   these topcoats differ from reference PUR topcoat formulation only in that the 90 parts of the high modulus polyether polyurethane component, as well as the 90 parts of the mixed polyether polycarbonate polyurethane are both reduced to 80 parts and the water is reduced to 150 parts. Introduced in the formulation are either 100 parts of anti soil component described in synthetic example 1 (trial topcoat d1) or 100 parts of the anti soil component described in synthetic example 9 (trial topcoat d2).

All other components are not changed.

### Application of topcoats a) - d):

all topcoats are applied the same way, namely:
about 900 parts of each topcoat is adjusted to a viscosity of ca. 26 sec (4 mm cup) as described already for the base coat. Then 100parts of crosslinker 2 are added. The resulting activated mix is sprayed twice (with intermediate drying) onto the base - coated leather specimens, each spray coat adding 0,7 g (dry) per squarefoot topcoat to the leather specimen. After drying for 10 min at 60°C and staying overnight, the resulting finished leathers were tested for fastness properties and martindale performance.

Results obtained are given in table 2

**Table 2: Properties of leathers having anti soil components in the topcoat, compared to those without these components**

| **Topcoat/ Property** | **Acrylic reference a** | **Trial topcoat c1** | **Trial topcoat c2** | **PUR reference b** | **Trial topcoat d1** | **Trial topcoat d2** |
|---|---|---|---|---|---|---|
| Martindale | 3-4 | 5 | 4-5 | 2-3 | 4-5 | 4 |
| Wet rub (1000) | No damage | No damage | No damage | No damage | No damage | No damage |
| Dry flex (100000) | o.k | o.k | ok | ok | ok | ok |
| Wet flex (20000) | ok | ok | ok | ok | ok | ok |
| Cold flex (20000) (- 20°C) | ok | ok | ok | ok | ok | ok |

### Comment on the results:

Apparently fastness properties of all finished leathers are not negatively affected by integrating the anti soil components into the topcoat formulations.

With respect to the Martindale results one can state, that integration of the anti soil components is advantageous. The differences observed here fit well to our experience. In general, acrylic topcoats show better martindale performance, compared to PUR topcoats. This difference can be seen in our results also.

### EXAMPLE 13 (not according to the invention)

20 parts by weight of the resin dispersion of Example 2, 2 parts by weight of Bayhydur 3100 (isocyanate-based curing agent from Bayer AG) and 28 parts by weight of water were mixed thoroughly to obtain a coating composition. The coating composition was applied in an amount of 100 g/m² on a glass fiber-reinforced epoxy resin plate having interdigital electrodes, made of CEM3 (thickness of the plate: 1.6 mm, thickness of the copper foil electrode: 18 µm and pattern width: 0.3mm). Then, the applied coating composition was dried at a temperature of 70 °C for 30 minutes to give a specimen having a coating film. Tackiness of the coating film was not observed according to JIS K5600 (dryness measured by finger touch). Afterward, the specimen was evaluated by means of a salt water spray testing machine.

Salt water resistance was measured in the following manner.

The obtained specimen was subjected to a combined test for 50 hours by using a salt water spray testing machine (a combined cycle testing machine ISO-3-CY.R (manufactured by Suga Test Instruments Co., Ltd., Japan) wherein one cycle consists of a salt water spray at a temperature of 35°C at a relative humidity (RH) of 98% for 2 hours, a hot-air drying at a temperature of 70 °C for 2 hours and a wetting at a temperature of 50 °C at a RH of 98% for 2 hours. It was visually observed whether or not rust was caused on the interdigital copper foil electrode.

Evaluation of salt water resistance was carried out according to the following criteria:
Point 5: Rusted area is from 0% to less than 5% on the basis of the interdigital electrode area,
Point 4: Rusted area is from 5% to less than 15% on the basis of the interdicital electrode area,
Point 3: Rusted area is from 15% to less than 30% on the basis of the interdigital electrode area,
Point 2: Rusted area is from 30% to less than 60% on the basis of the interdigital electrode area,
Point 1: Rusted area is from 60% to 100% on the basis of the interdigital electrode area.

Results are shown below.

The above coated specimen (Inventive): point 5

Uncoated specimen (Comparative): point 1

## Claims

1. A curable fluorinated copolymer A2 which is the reaction product of FC and
M1) trimellitic anhydride and optionally
M2) at least a monofunctional isocyanate,
wherein FC is a curable fluorinated copolymer on the basis of
FC1) at least one fluorinated olefm having 2 to 10 carbon atoms,
FC2) at least one non-fluorinated olefin having OH-groups and optionally carboxyl groups and
FC3) at least one non-fluorinated, hydroxyl group free olefin having optionally carboxyl groups.

2. A curable fluorinated copolymer A2 according to claim 1, wherein FC is a curable fluorinated copolymer on the basis of
FC1) tetrafluoroethene,
FC2) 2-hydroxyethyl vinyl ether, 3-hydroxypropyl vinyl ether, 4-hydroxybutyl vinyl ether, 2-hydroxyethyl allyl ether, 3-hydroxypropyl allyl ether, 4-hydroxybutyl allyl ether or mixtures thereof
and
FC3) maleic acid, maleic anhydride, fumaric acid, acrylic acid, methacrylic acid, itaconic acid, crotonic acid, vinylacetic acid, norbornene carboxylic acid, norbornene dicarboxylic acid, vinyl acetate, vinyl propionate, vinyl butyrate, vinyl hexanoate, vinyl octanoate, vinyl decanoate, vinyl dodecanoate, vinyl tetradecanoate, vinyl hexadecanoate, vinyl octadecanoate, vinyl lactate, vinyl pivalate, vinyl benzoate, vinyl para-tert-butyl benzoate, vinyl versatate, ethyl vinyl ether, cyclohexyl vinyl ether, isobutene, 2-methyl-1-pentene, dimethyl maleate, diethyl maleate, dibutyl maleate, diethyl fumarate, dibutyl fumarate or mixtures thereof.

3. A process for the manufacturing of the copolymer A2 according to claim 1 comprising the steps
1) reaction of a polymer solution comprising of solvent X and polymer FC, with trimellitic anhydride and optionally one or more polycarboxylic anhydrides, and optionally at least one monofunctional isocyanate, optionally in the presence of a solvent Y
2) neutralization of optional carboxylic groups by a base,
3) dispersion in water and
4) removal of the solvent preferably by distillation,
wherein solvent X is selected from the group of alcohols, ketones, ethers, esters, aromatic or aliphatic hydrocarbons and solvent Y is inert to polycarboxylic anhydrides and is selected from the group of esters, ketones, aromatic or aliphatic hydrocarbons.

4. Coating composition containing
- at least one curable fluorinated copolymer A2 according to claim 1 and
- at least one polyisocyanate crosslinker having at least 2 NCO units.

5. Aqueous coating composition according to claim 4.

6. Use of a curable fluorinated copolymer A2 according to claim 1 as coating agent for flexible substrates.

7. Use according to claim 6 wherein the copolymer A2 is used in combination with a crosslinker as coating agent.

8. Process for coating rigid substrates applying a curable fluorinated copolymer A2 according to claim 1 or a coating composition according to claim 4 onto the substrate.

9. A process for coating flexible substrates applying a curable fluorinated copolymer A2 according to claim 1 onto the substrate.

10. Substrate obtained by the process of claim 8 or 9.

11. Substrate coated with the copolymer A2 of claim 1 or a coating composition of claim 4.

## Patentansprüche

1. Härtbares fluoriertes Copolymer A2, bei dem es sich um das Reaktionsprodukt von FC und
M1) Trimellitsäureanhydrid und gegebenenfalls M2) mindestens einem monofunktionellen Isocyanat handelt, wobei es sich bei FC um ein härtbares fluoriertes Copolymer auf der Basis von FC1) mindestens einem fluorierten Olefin mit 2 bis 10 Kohlenstoffatomen,
FC2) mindestens einem nichtfluorierten Olefin, das
OH-Gruppen und gegebenenfalls Carboxylgruppen aufweist, und
FC3) mindestens einem nichtfluorierten, hydroxylgruppenfreien Olefin, das gegebenenfalls Carboxylgruppen aufweist,
handelt.

2. Härtbares fluoriertes Copolymer A2 nach Anspruch 1, wobei es sich bei FC um ein härtbares fluoriertes Copolymer auf der Basis von FC1) Tetrafluorethen,
FC2) 2-Hydroxyethylvinylether, 3-Hydroxypropyl-vinylether, 4-Hydroxybutylvinylether, 2-Hydroxyethylallylether, 3-Hydroxypropylallylether, 4-Hydroxybutylallylether oder Mischungen davon
und
FC3) Maleinsäure, Maleinsäureanhydrid, Fumarsäure,
Acrylsäure, Methacrylsäure, Itaconsäure, Crotonsäure, Vinylessigsäure, Norbornen-carbonsäure, Norbornendicarbonsäure, Vinyl-acetat, Vinylpropionat, Vinylbutyrat, Vinyl-hexanoat, Vinyloctanoat, Vinyldecanoat, Vinyldodecanoat, Vinyltetradecanoat, Vinyl-hexadecanoat, Vinyloctadecanoat, Vinyllactat, Vinylpivalat, Vinylbenzoat, Vinyl-para-tert-butylbenzoat, Vinylversatat, Ethylvinylether, Cyclohexylvinylether, Isobuten, 2-Methyl-l-penten, Dimethylmaleat, Diethylmaleat, Dibutylmaleat, Diethylfumarat, Dibutylfumarat oder Mischungen davon
handelt.

3. Verfahren zur Herstellung des Copolymers A2 gemäß Anspruch 1, das folgende Schritte umfasst:
1) Umsetzen einer Polymerlösung, die aus Lösungs-mittel X und Polymer FC besteht, mit Trimellitsäureanhydrid und gegebenenfalls einem oder mehreren Polycarbonsäureanhydriden und gegebenenfalls mindestens einem monofunktionellen Isocyanat, gegebenenfalls in Gegenwart eines Lösungsmittels Y,
2) Neutralisieren von fakultativen Carboxylgruppen durch eine Base,
3) Dispergieren in Wasser und
4) Entfernen des Lösungsmittels, vorzugsweise
durch Destillation,
wobei das Lösungsmittel X aus der Gruppe von Alkoholen, Ketonen, Ethern, Estern, aromatischen oder aliphatischen Kohlenwasserstoffen ausgewählt wird und das Lösungsmittel Y gegenüber Polycarbonsäureanhydriden inert ist und aus der Gruppe von Estern, Ketonen, aromatischen oder aliphatischen Kohlenwasserstoffen ausgewählt wird.

4. Beschichtungszusammensetzung, enthaltend
- mindestens ein härtbares fluoriertes Copolymer A2 gemäß Anspruch 1 und
- mindestens einen Polyisocyanat-Vernetzer mit mindestens 2 NCO-Einheiten.

5. Wässrige Beschichtungszusammensetzung nach Anspruch 4.

6. Verwendung eines härtbaren fluorierten Copolymers A2 gemäß Anspruch 1 als Beschichtungsmittel für flexible Substrate.

7. Verwendung nach Anspruch 6, wobei das Copolymer A2 in Kombination mit einem Vernetzer als Beschichtungsmittel verwendet wird.

8. Verfahren zum Beschichten von starren Substraten, bei dem man auf das Substrat ein härtbares fluoriertes Copolymer A2 gemäß Anspruch 1 oder eine Beschichtungszusammensetzung gemäß Anspruch 4 aufbringt.

9. Verfahren zum Beschichten von flexiblen Substraten, bei dem man auf das Substrat ein härtbares fluoriertes Copolymer A2 gemäß Anspruch 1 aufbringt.

10. Substrat, erhalten durch das Verfahren gemäß Anspruch 8 oder 9.

11. Substrat, das mit dem Copolymer A2 gemäß Anspruch 1 oder einer Beschichtungszusammensetzung gemäß Anspruch 4 beschichtet ist.

## Revendications

1. Copolymère fluoré durcissable A2 qui est le produit réactionnel de FC et de
M1) l'anhydride trimellitique et éventuellement M2) au moins un isocyanate monofonctionnel,
dans lequel FC est un copolymère fluoré durcissable à base de
FC1) au moins une oléfine fluorée ayant 2 à 10 atomes
de carbone,
FC2) au moins une oléfine non fluorée ayant des groupes
OH et éventuellement des groupes carboxyle et
FC3) au moins une oléfine non fluorée exempte de
groupes hydroxyle ayant éventuellement des groupes carboxyle.

2. Copolymère fluoré durcissable A2 selon 1a revendication 1, dans lequel FC est un copolymère fluoré durcissable à base de
FC1) tétrafluoroéthène,
FC2) oxyde de 2-hydroxyéthyle et de vinyle, oxyde de 3-hydroxypropyle et de vinyle, oxyde de 4-hydroxybutyle et de vinyle, oxyde de 2-hydroxyéthyle et d'allyle, oxyde de 3-hydroxypropyle et d'allyle, oxyde de 4-hydroxybutyle et d'allyle ou mélanges de ceux-ci
et
FC3) acide maléique, anhydride maléique, acide
fumarique, acide acrylique, acide méthacrylique, acide itaconique, acide crotonique, acide vinylacétique, acide norbornènecarboxylique, acide norbornènedicarboxylique, acétate de vinyle, propionate de vinyle, butyrate de vinyle, hexanoate de vinyle, octanoate de vinyle, décanoate de vinyle, dodécanoate de vinyle, tétradécanoate de vinyle, hexadécanoate de vinyle, octadécanoate de vinyle, lactate de vinyle, pivalate de vinyle, benzoate de vinyle, *para-tert-*butylbenzoate de vinyle, versatate de vinyle, oxyde d'éthyle et de vinyle, oxyde de cyclohexyle et de vinyle, isobutène, 2-méthylpent-1-ène, maléate de diméthyle, maléate de diéthyle, maléate de dibutyle, fumarate de diéthyle, fumarate de dibutyle ou mélanges de ceux-ci.

3. Procédé pour la fabrication du copolymère A2 selon la revendication 1 comprenant les étapes
1) réaction d'une solution de polymère comprenant du solvant X et du polymère FC, avec de l'anhydride trimellitique et éventuellement un ou plusieurs anhydrides polycarboxyliques, et éventuellement au moins un isocyanate monofonctionnel, éventuellement en présence d'un solvant Y,
2) neutralisation de groupes carboxyliques éventuels par une base,
3) dispersion dans de l'eau et
4) élimination du solvant de préférence par
distillation,
dans lequel le solvant X est choisi dans le groupe des alcools, des cétones, des éthers, des esters, des hydrocarbures aromatiques ou aliphatiques et le solvant Y est inerte vis-à-vis d'anhydrides polycarboxyliques et est choisi dans le groupe des esters, des cétones, des hydrocarbures aromatiques ou aliphatiques.

4. Composition de revêtement contenant
- au moins un copolymère fluoré durcissable A2 selon la revendication 1 et
- au moins un agent de réticulation polyisocyanate ayant au moins 2 motifs NCO.

5. Composition de aqueuse de revêtement selon la revendication 4.

6. Utilisation d'un copolymère fluoré durcissable A2 selon la revendication 1 en tant qu'agent de revêtement pour des substrats souples.

7. Utilisation selon la revendication 6 dans laquelle le copolymère A2 est utilisé en association avec un agent de réticulation en tant qu'agent de revêtement.

8. Procédé pour le revêtement de substrats rigides appliquant un copolymère fluoré durcissable A2 selon la revendication 1 ou une composition de revêtement selon la revendication 4 sur le substrat.

9. Procédé pour le revêtement de substrats souples appliquant un copolymère fluoré durcissable A2 selon la revendication 1 sur le substrat.

10. Substrat obtenu par le procédé selon la revendication 8 ou 9.

11. Substrat revêtu du copolymère A2 selon la revendication 1 ou d'une composition de revêtement selon la revendication 4.
